# FASCICULE DE BREVET EUROPEEN

(11) **EP 2 688 165 B1**
(45) Date de publication et mention de la délivrance du brevet: **18.03.2015**
(21) Numéro de dépôt: 13305805.7
(22) Date de dépôt: 14.06.2013
(51) Int. Cl.: H02G 1/00, H02G 3/38

(54) **Procédé de montage d'une cloison creuse**
Montageverfahren einer hohlen Trennwand
Method for mounting a hollow partition

(30) Priorité: 20.07.2012 FR 1202074
(43) Date de publication de la demande: 22.01.2014
(73) Titulaire: Legrand France, 87000 Limoges (FR); Legrand SNC, 87000 Limoges (FR)
(72) Inventeur: Maziere, Laurent, 87220 FEYTIAT (FR); Longeville, Jérome, 87350 Panazol (FR)
(74) Mandataire: Orsini, Fabienne

(56) Documents cités:
- EP-A1- 1 207 605
- US-A- 6 079 173

## Description

### DOMAINE TECHNIQUE AUQUEL SE RAPPORTE L'INVENTION

La présente invention concerne de manière générale le montage de cloisons creuses dans un bâtiment.

Elle concerne plus particulièrement un procédé de montage d'une cloison creuse.

L'invention trouve une application particulièrement avantageuse pour réaliser ou étendre une installation électrique, téléphonique, de fibre optique, ou toute autre installation faisant intervenir des éléments conducteurs, dans une cloison de doublage ou de séparation.

### ARRIERE-PLAN TECHNOLOGIQUE

Les cloisons creuses comportent généralement une structure métallique comportant, d'une part, deux rails horizontaux respectivement fixés au plafond et au sol, et, d'autre part, une pluralité de montants verticaux qui s'étendent entre les deux rails horizontaux.

Ces cloisons creuses comportent également des panneaux de fermeture, généralement en plâtre, vissés sur la structure métallique.

Lorsqu'il s'agit de cloisons de séparation, les panneaux de fermeture sont rapportés de part et d'autre de la structure métallique. En revanche, lorsqu'il s'agit de cloisons de doublage, la structure métallique s'appuie par un de ses côtés sur un mur en béton ou en parpaings (ou est située à distance réduite de ce mur) et les panneaux de fermeture sont rapportés uniquement sur l'autre côté de la structure métallique.

Si ces cloisons creuses sont faciles à installer, le câblage des appareillages (prise de courant, interrupteurs, prises VDI, prises de téléphone, ...) fixés sur les panneaux s'avère en revanche beaucoup plus délicat.

Les montants verticaux et les rails horizontaux de la structure métallique forment en effet autant d'obstacles qui ne permettent pas de tirer des câbles électriques à l'intérieur de la cloison.

Une solution connue du document US6023893 consiste alors à utiliser une structure métallique en trois épaisseurs et à retirer deux de ces épaisseurs dans certaines zones de la structure métallique pour libérer un passage pour les câbles électriques.

Cette solution technique permet ainsi aux câbles électriques de naviguer à l'intérieur de la cloison creuse.

L'inconvénient majeur de cette solution est qu'elle ne répond pas aux critères normatifs d'isolation de certains types d'éléments conducteurs dans les cloisons creuses, selon lesquels les éléments conducteurs doivent être doublement isolés. Ainsi ces éléments conducteurs doivent-ils non seulement être isolés par leur propre gaine isolante, mais également par un conduit supplémentaire.

Un autre inconvénient de cette solution est que, si le câblage est rendu possible par la structure de l'ossature métallique, il n'en est pas rendu pour autant aisé. On comprend en effet que les câbles électriques doivent être engagés dans les passages prévus dans l'ossature avant que les panneaux de fermeture ne soient rapportés sur celle-ci, et doivent donc être maintenus en place pendant la fixation des panneaux de fermeture.

Un dernier inconvénient de cette solution est que, une fois les panneaux de fermeture fixés à l'ossature, il n'est plus possible d'accéder aux différents câbles électriques pour y connecter de nouveaux appareillages électriques. Ces câbles électriques présentent en effet un cheminement qui est irrégulier.

Lors du montage de telles cloisons creuses, il est donc nécessaire de coordonner précisément les diverses interventions des installateurs électriques, téléphoniques ou autres par rapport à celles des plaquistes afin de permettre l'installation et le raccordement des appareillages électriques rapportés sur les cloisons creuses.

Enfin, il est impossible d'étendre ultérieurement une installation existante raccordée au réseau de conducteurs sans démonter les panneaux de fermeture des cloisons creuses.

On connaît par ailleurs des documents US6079173 et EP1207605 d'autres procédés pour installer des appareillages électriques dans des cloisons creuses. Ces procédés s'avèrent toutefois difficiles à mettre en oeuvre.

### OBJET DE L'INVENTION

Afin de remédier aux inconvénients précités de l'état de la technique, la présente invention propose de positionner, lors du montage de la cloison creuse, un conduit supplémentaire à l'arrière des panneaux de cette cloison creuse pour permettre un cheminement plus sûr et plus aisé des éléments conducteurs d'une installation rapportée sur une telle cloison.

Plus particulièrement, on propose selon l'invention un procédé de montage d'une cloison creuse tel que défini dans la revendication 1.

Lorsque la cloison creuse est montée, le conduit est caché par le panneau de la cloison creuse.

Alors, selon l'invention, il est prévu de percer le panneau de la cloison creuse pour pouvoir accéder aux éléments conducteurs logés dans le conduit, en pratiquant une fenêtre dans ce conduit.

Cet accès est bien entendu possible lors du câblage initial de la cloison creuse, ou plus tard, lors d'un éventuel chantier de rénovation au cours duquel on étendrait l'installation existante en rajoutant d'autres appareillages sur la cloison creuse et en raccordant ces nouveaux appareillages aux éléments conducteurs circulant dans le conduit placé à l'arrière du panneau de la cloison creuse.

D'autres caractéristiques avantageuses et non limitatives du procédé de câblage conforme à l'invention sont définies dans les revendications 2 à 9.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une ossature métallique d'un premier mode de réalisation d'une cloison creuse ;
- les figures 2 à 5 représentent les différentes étapes de mise en oeuvre d'un mode de réalisation du procédé de montage conforme à l'invention ;
- les figures 6 à 8 représentent les différentes étapes de mise en oeuvre d'un autre mode de réalisation du procédé de montage conforme à l'invention ; et
- les figures 9 et 10 sont des vues schématiques de deux variantes de réalisation de conduits de câbles.

Des panneaux de fermeture en plâtre, tels que ceux commercialisés par la société Saint Gobain sous la marque Placoplatre® BA 13, ou en bois sont généralement utilisés dans les bâtiments pour créer des cloisons de séparation ou pour doubler des murs existants.

Pour les installer, on utilise une ossature métallique ou en bois que l'on fixe au sol et au plafond.

Lorsqu'il s'agit de créer une cloison de séparation, l'ossature est alors recouverte de panneaux de fermeture sur ses deux côtés, tandis que lorsqu'il s'agit de couvrir un mur par une cloison de doublage, l'ossature n'est recouverte de panneaux de fermeture que sur un seul de ses deux côtés.

Quoi qu'il en soit, cette ossature et ces panneaux forment alors ensemble une « cloison creuse ».

Dans les deux modes de réalisation illustrés sur les figures, la cloison creuse comportera une ossature métallique et des panneaux de fermeture en plâtre. Elle sera prévue pour couvrir une paroi murale préexistante, si bien que son ossature métallique sera disposée verticalement et sera recouverte de panneaux de fermeture d'un seul côté.

Dans la description, les termes « avant » et « arrière » seront alors utilisés par rapport à cette paroi murale. Ainsi, l'arrière désignera le côté tourné vers la paroi murale tandis que l'avant désignera le côté opposé.

Par ailleurs, l'expression « section transversale » sera utilisée en relation avec des éléments qui seront allongés suivant des axes longitudinaux (tels que des poutrelles profilées) pour décrire leurs sections dans des plans orthogonaux à leurs axes longitudinaux.

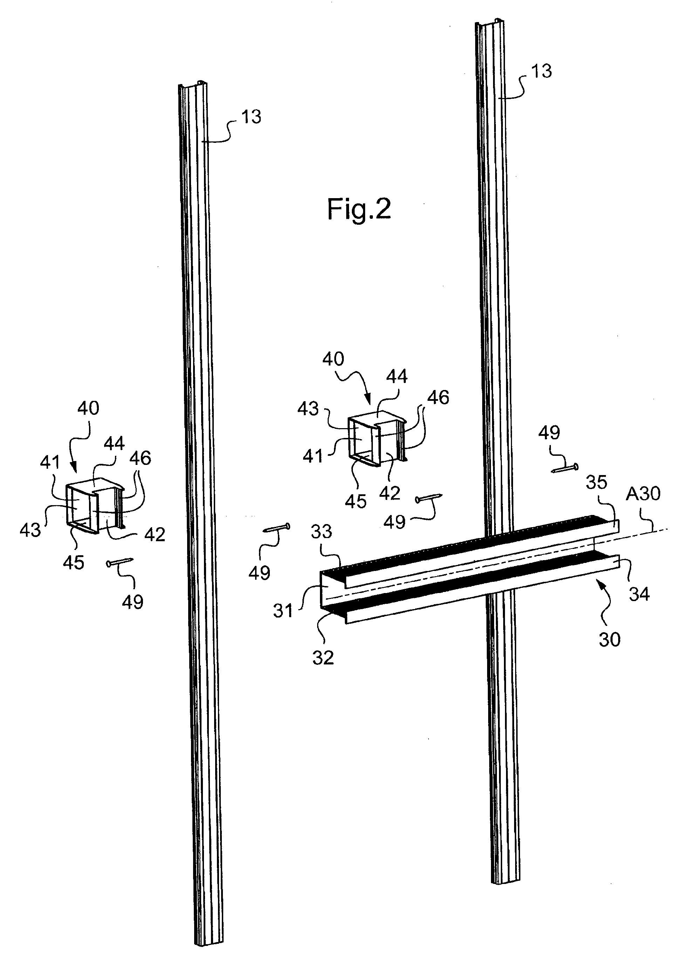

Sur les figures 2 à 5, on a représenté les différentes étapes d'un premier mode de réalisation d'un procédé de montage d'une cloison creuse à l'intérieur d'un bâtiment.

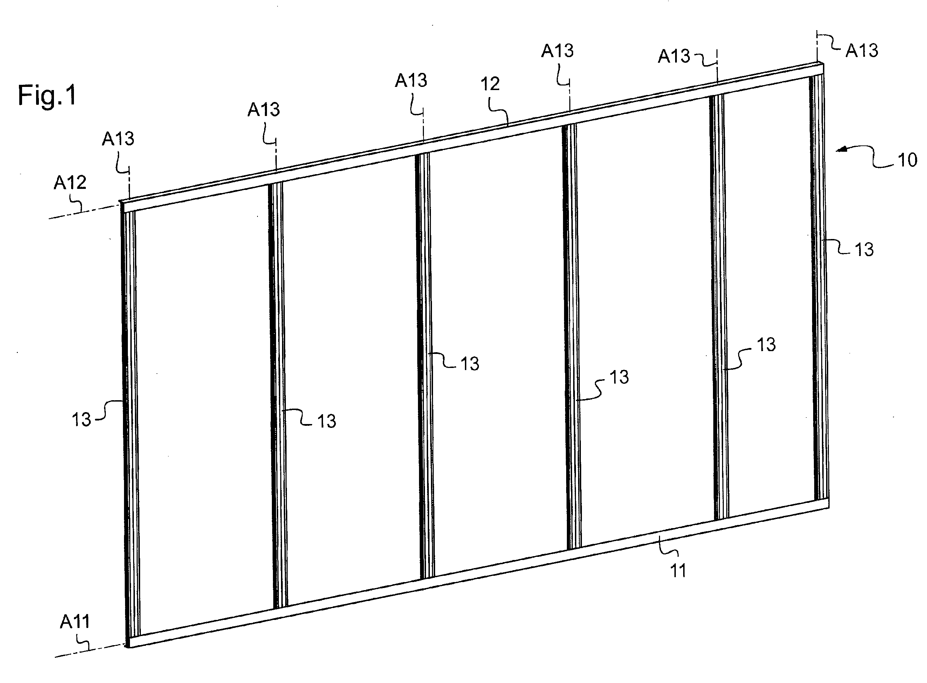

Comme le montre la figure 1, cette cloison creuse comporte une ossature métallique 10, ici constituée de deux types de longerons (ou « poutrelles »), à savoir de rails horizontaux 11, 12 à fixer au sol et au plafond, et de montants verticaux 13 à fixer verticalement entre les rails horizontaux. Les montants verticaux sont placés en parallèle, dans un même plan, si possible à espaces réguliers les uns des autres.

Les rails horizontaux 11, 12 sont identiques et profilés suivant des axes longitudinaux A11, A12. Ils présentent des sections transversales en L, et comportent donc chacun deux pans à angle droit.

Les deux rails horizontaux 11, 12 sont respectivement fixés au sol et au plafond, parallèlement l'un à l'autre et l'un au-dessus de l'autre.

Ils sont plus précisément vissés sur le sol et le plafond de telle sorte qu'un de leurs pans s'applique contre le sol ou le plafond et que l'autre de leurs pans soit tourné vers l'avant.

Les montants verticaux 13 sont également tous identiques. Ils sont profilés suivant des axes longitudinaux A13 et présentent des sections transversales en forme de C.

Chaque montant vertical 13 comporte ainsi une paroi frontale dont les deux bords sont repliés à angle droit vers l'arrière pour former deux ailes, les bords de ces ailes étant également repliés à angle droit l'un vers l'autre.

Les montants verticaux 13 sont découpés à la longueur adéquate et sont installés verticalement entre les deux rails horizontaux 11, 12, de telle manière que leurs deux extrémités viennent respectivement au contact de ces deux rails horizontaux 11, 12. Ces montants verticaux 13 sont plus précisément ici vissés sur les rails horizontaux 11, 12.

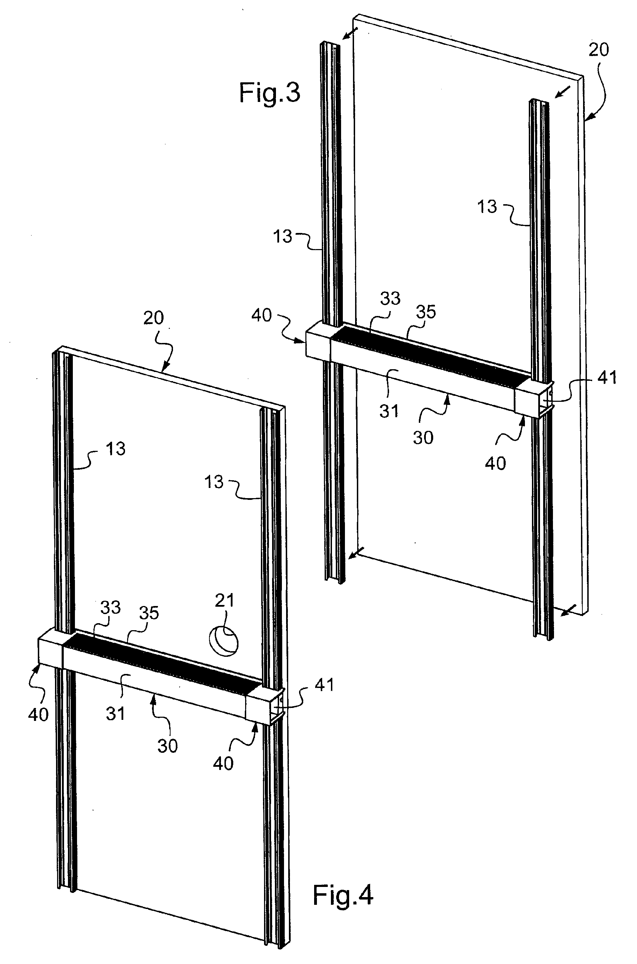

Comme le montrent les figures 2 et 3, le procédé de montage comporte une première étape de montage d'un conduit 30 entre chaque paire de montants verticaux 13 voisins, au moyen de colliers 40.

Pour la clarté des figures, on a seulement représenté sur les figures 2 et 3 une paire de montants verticaux 13 voisins et un conduit 30. Bien entendu, cette étape de montage sera réalisée entre chaque paire de montants verticaux 13, de manière que les conduits 30 forment ensemble une seule conduite rectiligne passant à l'arrière de tous les montants verticaux 13.

Chaque conduit 30 est ainsi prévu pour permettre le cheminement à l'arrière de l'ossature métallique 10 d'éléments conducteurs tels des câbles électriques, des fils électriques, des fibres optiques, ou encore des conducteurs d'air ou d'eau. Ici, ces éléments conducteurs seront des câbles électriques.

Ce conduit 30 est profilé suivant un axe longitudinal A30 et présente une section transversale globalement de forme carrée ou en forme de U. Il comporte ainsi une paroi de fond 31 plane dont les deux bords sont repliés à angle droit vers l'avant pour former deux ailes latérales 32, 33. Les bords avant de ces ailes latérales 32, 33 portent ici des rebords 34, 35 plats qui s'étendent parallèlement à la paroi de fond 31, de part et d'autre de chaque aile latérale. Un couvercle (non visible sur les figures) pourrait être rapporté sur les ailes latérales pour fermer l'ouverture longitudinale définie entre les rebords de ces ailes latérales.

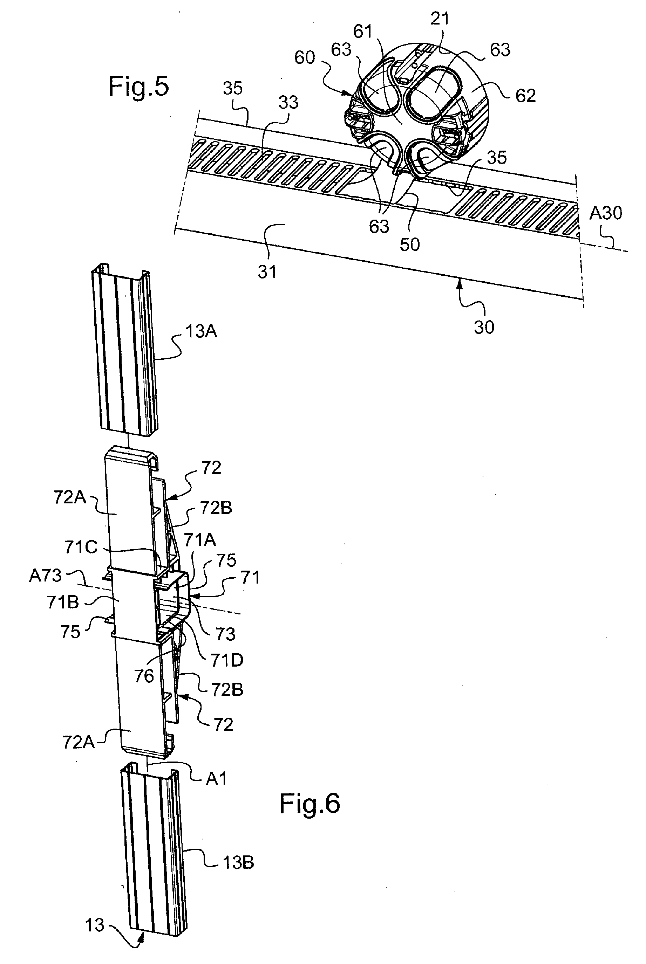

Comme le montre bien la figure 5, l'une au moins des ailes latérales 32, 33 de ce conduit 30 présente des parties défonçables ou sécables.

En l'espèce, ici, les deux ailes latérales 32, 33 du conduit 30 sont identiques et présentent une pluralité de fentes rectilignes juxtaposées, d'axes orthogonaux à l'axe longitudinal A30. Ces fentes sont régulièrement réparties le long des ailes latérales, à distance réduite les unes des autres, pour délimiter entre elles des languettes sécables.

Comme le montre la figure 2, les colliers 40 présentent quant à eux des formes tubulaires de sections carrées afin de délimiter des passages 41 pour les câbles électriques ou autres. Chaque collier 40 comporte ainsi quatre parois deux à deux opposées, dont une paroi frontale 42, une paroi de fond 43, une paroi supérieure 44 et une paroi inférieure 45.

La paroi de fond 43 est plane et carrée. Elle présente une largeur supérieure à celle des parois frontales des montants verticaux 13.

La paroi frontale 42 présente une largeur comprise entre celle de la paroi de fond 43 et celle des montants verticaux 13. Elle comporte un renfoncement en creux délimité par deux ailes verticales 46 parallèles, de formes rectangulaires. Ces deux ailes verticales 46 sont écartées d'une distance sensiblement égale à la largeur du montant vertical 13. Elles portent sur leurs faces intérieures des nervures verticales qui leur permettent de s'encliqueter sur les montants verticaux 13.

Les parois supérieure et inférieure 44, 45 de chaque collier 40 sont quant à elles planes et présentent, du fait des différences de largeurs entre la paroi de fond 43 et la paroi frontale 42, des formes globalement trapézoïdales.

Grâce à ces formes, les parois supérieure et inférieure 44, 45 délimitent, avec la paroi de fond 43, deux gorges (ou « étriers ») qui sont situées aux deux débouchés du passage 41, et qui s'ouvrent vers l'avant pour accueillir transversalement les extrémités des conduits 30.

Au cours de l'étape de montage du conduit 30, les deux colliers 40 sont rapportés par l'arrière sur les deux montants verticaux 13, en encliquetant leurs deux ailes verticales 46 sur les montants verticaux 13.

Les positions en hauteur de ces colliers 40 sont ensuite ajustées en faisant coulisser au besoin les colliers 40 le long des montants verticaux 13. Une fois positionnés à la hauteur souhaitée, les colliers 40 sont fixés sur les montants verticaux 13 au moyen de vis 49 engagées au travers de leurs ailes verticales 46 et des ailes des montants verticaux 13.

En variante, les colliers pourraient bien entendu être encliquetés (voire aussi vissés) sur les montants verticaux, avant que ces derniers ne soit installés verticalement entre les deux rails horizontaux.

Le conduit 30 est ensuite au besoin coupé à la longueur souhaitée puis il est engagé dans les colliers 40 en faisant respectivement coulisser transversalement ses deux extrémités dans les gorges délimitées par les parois supérieure, inférieure et de fond 43, 44, 45 des colliers 40.

Ce conduit 30 présente une profondeur telle que lorsqu'il est engagé au fond de ces gorges, ses rebords 34, 35 s'étendent à l'affleurement des parois frontales des montants verticaux 13.

A ce stade, le conduit 30 est encore libre de pouvoir être extrait des colliers 40.

Lorsque le conduit 30 est rapporté dans les colliers 40 à l'arrière des montants verticaux 13, les ailes latérales 32, 33 de ce conduit 30 s'étendent sensiblement orthogonalement aux axes A13 longitudinaux des montants verticaux 13.

Les gaines électriques qui transportent les câbles ou les fils électriques sont ensuite enfilées à l'intérieur des conduits 30.

Comme le montre plus particulièrement la figure 3, le procédé de montage comporte une deuxième étape de mise en place de panneaux de fermeture 20 sur l'ossature métallique 10 de la cloison creuse.

Ici, les panneaux de fermeture 20 sont en plâtre. Ils sont alors simplement fixés à l'ossature métallique 10 au moyen de vis auto-perceuses adaptées à traverser les panneaux de fermeture 20 et à se visser dans les rails horizontaux 11, 12 et dans les montants verticaux 13.

Ainsi fixés, les panneaux de fermeture 20 s'appliquent contre les rebords 34, 35 des conduits 30, ce qui permet de bloquer fixement ces derniers au fond des gorges des colliers 40.

Les ailes latérales 32, 33 des conduits 30, pourvues de languettes sécables, s'étendent alors ici sensiblement orthogonalement à la face arrière des panneaux de fermeture de la cloison creuse.

Par la suite, comme le montre la figure 4, le procédé de montage comporte une troisième étape de perçage du panneau 20.

Cette étape consiste à pratiquer une ouverture dans le panneau 20, à la hauteur souhaitée, c'est-à-dire par exemple à la hauteur où l'on souhaite installer un appareillage électrique.

Cette ouverture 21 est réalisée au moyen d'une scie cloche, à côté du conduit 30. Elle présente ainsi un contour circulaire d'un diamètre standard, permettant l'accueil d'une boîte.

Une telle boite 60, telle qu'elle est représentée sur la figure 5, comporte un fond circulaire 61 bordé à l'avant par une paroi latérale 62 cylindrique. Cette paroi latérale 62 est elle-même bordée à l'avant par une couronne périphérique (non visible sur les figures) adaptée à s'appuyer contre la face avant du panneau 20, autour de l'ouverture 21. Cette boîte 60 comporte par ailleurs des opercules défonçables 63 qui, une fois défoncés, libèrent des trous pour le passage des gaines ou des câbles électriques.

Comme le montre la figure 5, le procédé de montage comporte une ultime étape de câblage d'un appareillage tel qu'un interrupteur, une prise de courant, une prise réseau, ...

Au cours de cette étape, l'installateur engage sa main au travers de l'ouverture 21 pratiquée dans le panneau 20 de manière à pouvoir casser certaines des languettes constituant l'aile supérieure 33 du conduit 30, afin de dégager une fenêtre 35 d'accès à l'intérieur du conduit 30. Cette fenêtre 35 est alors située au droit de l'ouverture 21, c'est-à-dire ici au-dessous de l'ouverture 21.

L'installateur peut ainsi saisir une gaine électrique 50 logée à l'intérieur du conduit 30 de manière à tirer son extrémité à l'extérieur du conduit 30 au travers de la fenêtre 35, et à l'extérieur de la cloison creuse au travers de l'ouverture 21.

Il peut ensuite enfiler cette extrémité de la gaine électrique 50 au travers d'un trou d'accès qu'il aura préalablement dégagé au fond de la boîte 60, puis effectuer le raccordement électrique des câbles d'alimentation issus de cette gaine électrique 50 aux bornes du mécanisme de cet appareillage électrique, et enfin rapporter cette boîte 60 dans l'ouverture 21.

Sur les figures 6 à 8, on a représenté un second mode de réalisation d'un procédé de montage d'une cloison creuse qui se distingue principalement du procédé décrit précédemment en référence aux figures 1 à 5 par le fait que le conduit 80 n'est pas installé à l'arrière des montant verticaux 13, mais au travers de ces derniers.

Comme le montre bien la figure 6, chacun des montants 13 est à cet effet coupé en deux tronçons 13A, 13B qui sont connectés ensemble, dans l'axe l'un de l'autre, au moyen d'un accessoire de connexion 70.

Cet accessoire de connexion 70 comporte une partie centrale 71 qui délimite un passage 73 pour les gaines ou câbles électriques, et deux parties d'extrémité 72 qui s'étendent de part et d'autre de la partie centrale 71 et qui sont respectivement adaptées à immobiliser les deux tronçons 13A, 13B du montant vertical 13.

La partie centrale 71 présente une forme tubulaire de section carrée. Elle comporte ainsi une paroi de fond 71A, une paroi frontale 71B, une paroi supérieure 71 C et une paroi inférieure 71 D. Ces parois sont ici chacune formées de deux plaques planes superposées liées ensemble par des nervures de rigidification.

Le passage 73 délimité par ces parois s'étend selon un axe A73 et présente une section transversale carrée. Il est en partie bordé, du côté de chacun de ses deux débouchés, par un bord d'accostage 75 conçu pour bloquer l'extrémité du conduit 80 dans l'axe du passage 73.

En l'espèce, chaque bord d'accostage 75 présente ici une forme de U ouvert vers l'avant puisqu'il borde le passage 73 seulement le long des parois supérieure 71C, de fond 71A et inférieure 71D de la partie centrale 71.

Les deux branches du U de chaque bord d'accostage 75 s'étendent parallèlement l'une à l'autre, depuis la paroi de fond 71A de la partie centrale 71, vers la paroi frontale 71 B. Ces deux branches se courbent toutefois à proximité de la paroi frontale 71 B, de telle sorte qu'elles se rapprochent l'une de l'autre pour former un rétrécissement puis qu'elles s'écartent l'une de l'autre pour former un élargissement.

L'élargissement délimite ainsi une rampe d'accès permettant de faciliter l'engagement transversal de l'extrémité du conduit 80 sur l'accessoire de connexion 70, tandis que le rétrécissement permet d'encliqueter cette extrémité du conduit 80 au fond de la gorge délimitée par le bord d'accostage 75 de l'accessoire de connexion 70, de telle manière qu'il reste bloqué dans le prolongement du passage 73.

Comme le montre bien la figure 6, chaque bord d'accostage 75 forme, à sa jonction avec la partie centrale 71, un épaulement 76 qui permet de bloquer le conduit 80 d'un côté suivant l'axe A73.

Ainsi, lorsque le conduit 80 est engagé entre deux accessoires de connexion 70, les épaulements 76 formés sur ces deux accessoires de connexion 70 permettent de bloquer le conduit 80 dans les deux sens suivant l'axe A73.

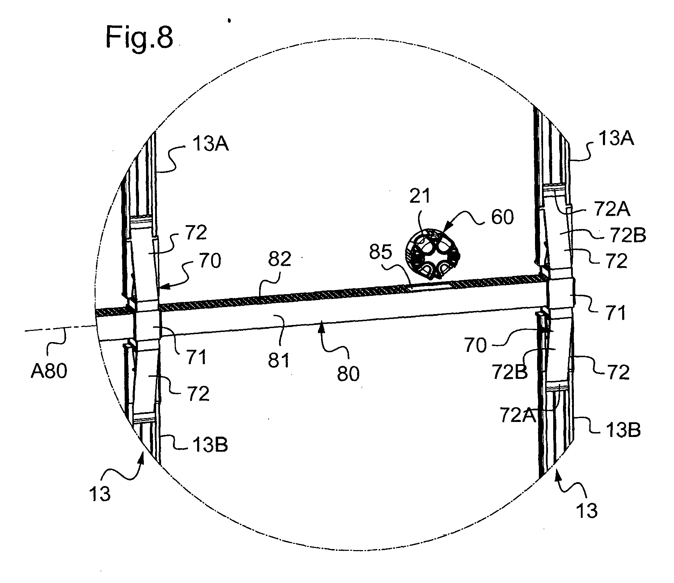

Comme le montrent bien les figures 6 et 8, chacune des deux parties d'extrémité 72 de l'accessoire de connexion 70 comporte une poutre principale 72A qui est globalement parallélépipédique et qui est adaptée à coulisser à l'intérieur des tronçons 13A, 13B du montant vertical 13, et un renfort latéral 72B qui épaule la poutre principale 72 A et qui est prévu pour faire saillie à l'arrière des tronçons 13A, 13B du montant vertical 13.

La poutre principale 72A est allongée suivant un axe A1. Elle présente une section transversale dont les dimensions sont égales, au jeu près, aux dimensions intérieures de la section transversale des tronçons 13A, 13B du montant vertical 13.

De cette manière, lorsque les deux tronçons 13A, 13B du montant vertical 13 sont engagés sur les deux parties d'extrémité 72 de l'accessoire de connexion 70 puis sont fixés aux rails horizontaux de l'ossature métallique de la cloison creuse, ils sont immobilisés dans l'axe l'un de l'autre par l'accessoire de connexion 70.

Le renfort latéral 72B de chaque partie d'extrémité 72 de l'accessoire de connexion 70 s'étend quant à lui depuis la partie centrale 71 jusqu'à proximité de l'extrémité libre de la poutre principale 72A, le long d'un seul des côtés de cette dernière. Il présente une section transversale à l'axe A73 en forme de triangle rectangle dont la base longe la partie centrale 71 et dont le sommet est tourné vers l'extrémité libre de la poutre principale 72A.

Comme le montre bien la figure 8, ce renfort latéral 72B délimite, avec la poutre principale 72A, deux rainures ouvertes à l'opposé l'une de l'autre dans lesquelles peuvent coulisser les bords repliés des ailes des tronçons 13A, 13B du montant vertical 13.

Cet accessoire de connexion 70 est ici réalisé par moulage d'une seule pièce en matière plastique.

Le conduit 80 est profilé suivant un axe longitudinal A80 et présente une section transversale carrée. Il comporte ainsi une paroi de fond 81 et une paroi frontale planes, ainsi que deux ailes supérieure 82 et inférieure. Puisqu'il présente un contour fermé, ce conduit 80 forme une « goulotte ».

Comme le montre bien la figure 8, les deux ailes supérieure 82 et inférieure sont formées de languettes sécables juxtaposées, identiques à celles du conduit 30 représenté sur les figures 2 à 5.

Le procédé de montage de la cloison creuse représentée sur les figures 6 à 8 est alors réalisé en cinq étapes.

Comme le montre la figure 6, au cours de la première étape, chacun des montants verticaux 13 est découpé en deux tronçons 13A, 13B qui sont ensuite emmanchés sur les deux parties d'extrémité 72 de l'accessoire de connexion 70 correspondant.

Ces montants verticaux 13 sont alors installés verticalement entre les deux rails horizontaux préalablement fixés au sol et au plafond, puis sont vissés sur ces derniers.

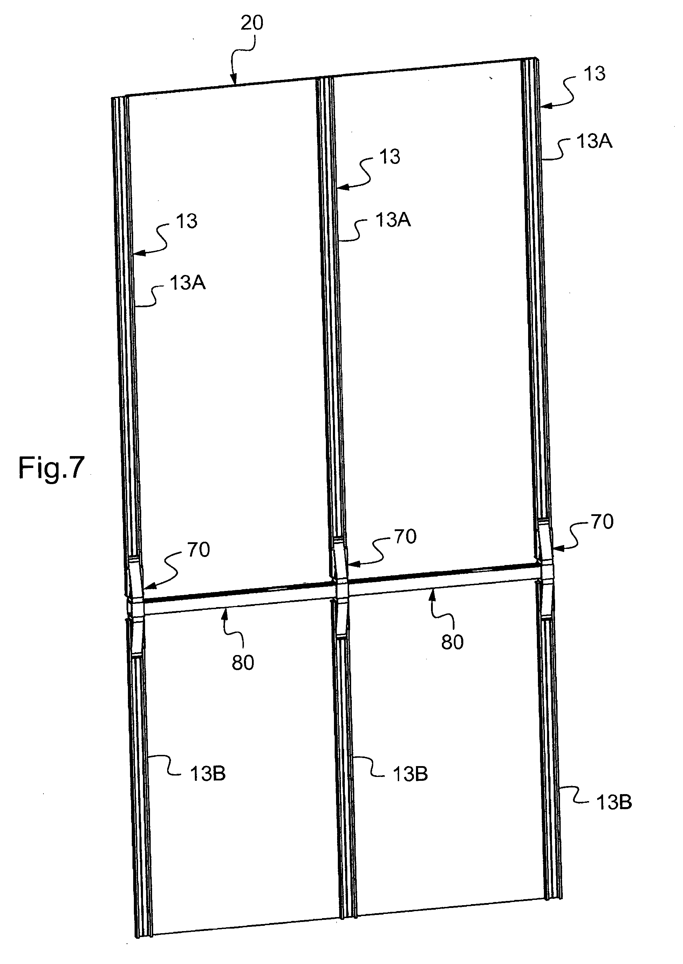

En référence aux figures 7 et 8, le procédé de montage comporte une seconde étape de montage d'une goulotte 80 entre chaque paire de montants verticaux 13 voisins.

Cette étape consiste à rapporter par l'avant les extrémités de chaque goulotte 80 dans les gorges délimitées par les bords d'accostage 75 prévus de part et d'autre de chaque accessoire de connexion 70.

Une fois les extrémités de chaque goulotte 80 encliquetées dans ces gorges, ces goulottes 80 forment avec les parties centrales 71 des accessoires de connexion 70 une longue conduite qui traverse les montants verticaux 13.

Lorsque le conduit 80 est rapporté au travers des montants verticaux 13, les ailes supérieure 82 et inférieure de ce conduit sont positionnées sensiblement orthogonalement aux axes longitudinaux de ces montants verticaux, si bien que lorsque les panneaux de fermeture de la cloison creuse sont rapportés sur l'ossature métallique, les ailes du conduit 80 s'étendent sensiblement orthogonalement à la face arrière desdits panneaux.

Les gaines ou câbles électriques peuvent alors être enfilés à l'intérieur de cette longue conduite.

Puis, comme dans le premier mode de réalisation, décrit en référence aux figures 2 à 5, on perce une ouverture 21 dans un des panneaux de fermeture 20, à côté du conduit 80. Au travers de cette ouverture 21, l'installateur ouvre alors une fenêtre 85 dans le conduit 80, en cassant certaines des languettes de l'aile supérieure 82 du conduit 80. La fenêtre 85 s'étend ainsi au droit de l'ouverture 21. Par cette fenêtre 85, l'installateur peut avantageusement tirer une gaine électrique pour venir câbler un mécanisme d'appareillage à rapporter dans une boîte 60, puis enfoncer la boîte 60 dans l'ouverture 21.

La présente invention n'est nullement limitée aux modes de réalisation décrits et représentés, mais l'homme du métier saura y apporter toute variante conforme à son esprit.

En particulier, on pourra prévoir de pratiquer l'ouverture dans le panneau non pas au-dessus, mais en dessous du conduit de câble. Alors, l'aile du conduit dans laquelle sera pratiquée une fenêtre sera l'aile inférieure.

On pourra par ailleurs prévoir de fixer le conduit de câbles non pas aux montants verticaux de l'ossature métallique de la cloison creuse, mais plutôt aux panneaux de plâtre eux-mêmes.

On pourra par ailleurs prévoir d'appliquer le procédé décrit à un faux-plafond. Alors, les rails horizontaux seront fixés, non pas au sol et au plafond, mais plutôt à deux parois murales situées en vis-à-vis.

Enfin, on pourra prévoir d'utiliser des conduits de câbles différents de ceux représentés sur les figures 1 à 8.

En particulier, on pourra utiliser un conduit de câbles dont l'aile supérieure sera plane et comportera des opercules circulaires défonçables régulièrement répartis le long de cette aile, à distance les uns des autres.

On pourra également utiliser un conduit de câbles dont l'aile supérieure sera formée de parties défonçables en formes de triangles isocèles. Ces parties défonçables seront alors disposées deux à deux de manière adjacente, dans des sens opposés. Ainsi, en défonçant deux de ces parties défonçables adjacentes, l'installateur pourra libérer une ouverture trapézoïdale dans l'aile supérieure du conduit de câbles.

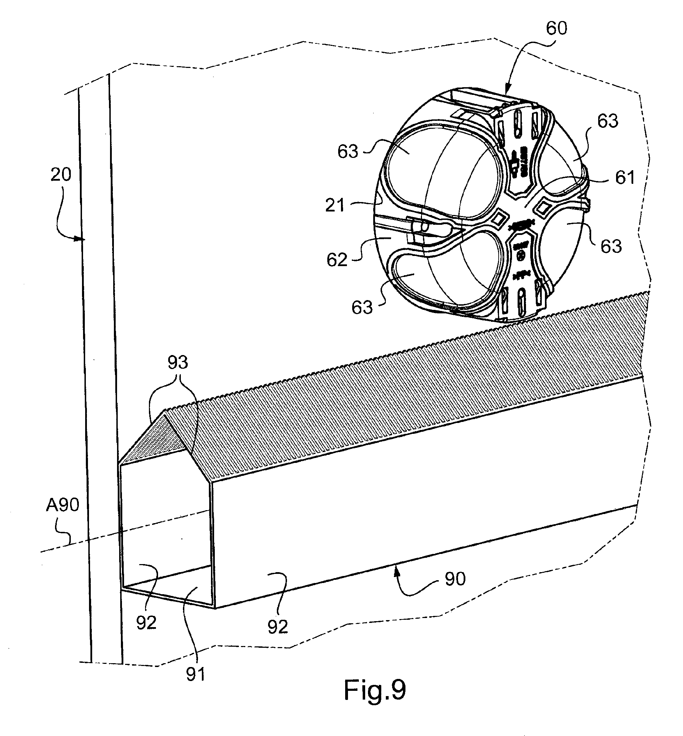

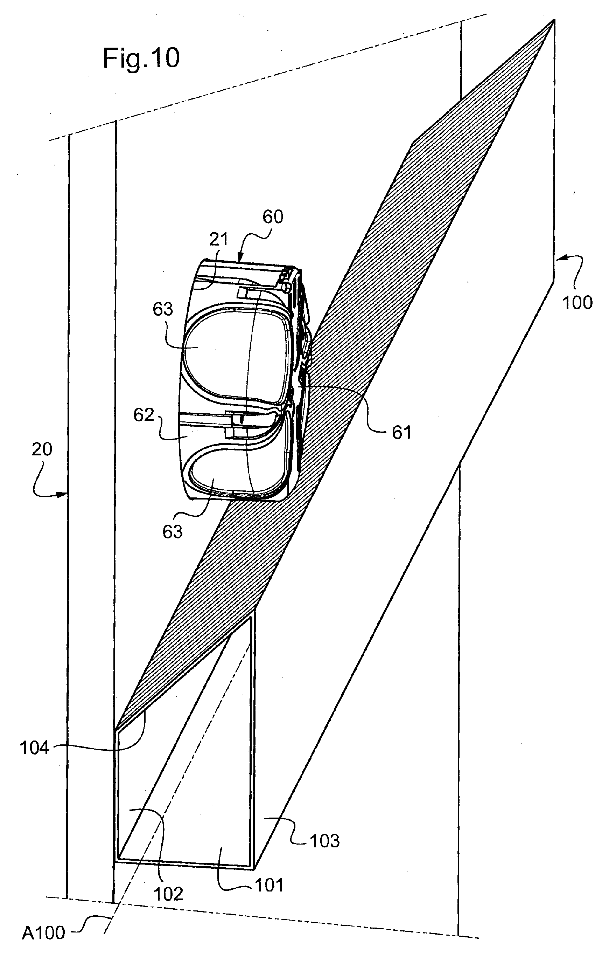

On pourra encore utiliser un conduit de câbles 90, 100 du type de ceux représentés sur les figures 9 et 10, qui peut être positionné sur la cloison creuse de telle manière qu'un pan de ce conduit s'étende de manière inclinée par rapport à la face arrière du panneau de plâtre 20.

Dans la variante représentée sur la figure 9, le conduit de câbles 90 est profilé suivant un axe longitudinal A90 et présente une section transversale en forme de maison.

Il comporte ainsi une paroi inférieure 91 pleine et plane, deux parois latérales 92 pleines et planes qui s'élèvent à partir des bords longitudinaux de la paroi inférieure 91, orthogonalement à celle-ci, et un toit formé de deux pans 93 inclinés à angle droit l'un par rapport à l'autre. Ces deux pans 93 sont ainsi inclinés à 135 degrés par rapport aux parois latérales 92 auxquelles ils se raccrochent. Les deux pans 93 sont formés de languettes juxtaposées et sécables, permettant de dégager une fenêtre de passage de conducteurs électriques depuis l'intérieur du conduit vers l'ouverture circulaire 21 pratiquée dans le panneau de plâtre correspondant.

La forme de ce conduit de câbles 90 est avantageuse puisque, comme le montre bien la figure 9, son toit présent un pan 93 tourné du côté de chaque panneau de plâtre de la cloison creuse, ce qui facilite la découpe d'une fenêtre de passage depuis l'ouverture circulaire 21 pratiquée dans l'un ou l'autre des panneaux de plâtre.

Dans la variante représentée sur la figure 10, le conduit de câbles 100 est profilé suivant un axe longitudinal A100 et présente une section transversale en forme de trapèze rectangle.

Il comporte ainsi une paroi inférieure 101 pleine et plane, deux parois latérales 102, 103 pleines et planes qui s'élèvent à partir des bords longitudinaux de la paroi inférieure 101, orthogonalement à celle-ci, et un pan supérieur 104 incliné à 45 degrés par rapport à la paroi inférieure 101. Ce pan supérieur 104 est formé de languettes juxtaposées et sécables. Il est tourné du côté du panneau de plâtre 20, vers l'ouverture circulaire 21 qui y est pratiquée, ce qui facilite la découpe d'une fenêtre de passage dans le pan supérieur 104 depuis l'ouverture circulaire 21.

## Revendications

1. Procédé de montage d'une cloison creuse, comprenant des étapes consistant à :
a) positionner un conduit (30 ; 80) de cheminement d'éléments conducteurs (50) relativement à une ossature (10) de la cloison creuse de telle manière qu'une aile latérale (33) dudit conduit (30 ; 80) s'étende transversalement à la face arrière d'un panneau (20) de ladite cloison creuse,
b) percer une ouverture (21) au travers dudit panneau (20),
c) accéder audit conduit (30 ; 80) au travers de ladite ouverture (21 pour ouvrir localement une fenêtre (35 ; 85) **caractérisé par le fait que** ladite fenêtre est dans ladite aile latérale (33).

2. Procédé de montage selon la revendication 1, dans lequel, à l'étape b), ladite ouverture (21) est percée à côté dudit conduit (30 ; 80).

3. Procédé de montage selon l'une des revendications 1 et 2, dans lequel il est prévu une étape d) consistant à tirer un élément conducteur (50) depuis l'intérieur dudit conduit (30 ; 80) jusqu'à ladite ouverture (21) pour y connecter un appareillage rapporté sur ledit panneau.

4. Procédé de montage selon la revendication 3, dans lequel, à l'étape d), une boîte (60) présentant un trou d'accès est engagée à l'intérieur de ladite ouverture (21) de telle manière que ledit élément conducteur (50) passe au travers dudit trou d'accès.

5. Procédé de montage selon l'une des revendications 1 à 4, dans lequel, ladite aile latérale (33 ; 82) présentant une pluralité de parties sécables ou défonçables, ladite étape c) consiste à casser ou à défoncer l'une au moins desdites parties sécables.

6. Procédé de montage selon l'une des revendications 1 à 5, dans lequel, à l'étape a), ledit conduit (30 ; 80) est fixé à l'ossature (10) puis le panneau (20) est fixé à l'ossature (10) pour recouvrir le conduit (30 ; 80).

7. Procédé de montage selon la revendication 6, dans lequel à l'étape a), au moins deux colliers (40) qui délimitent chacun un passage (41) pour les éléments conducteurs (50) sont fixés sur des longerons (13) parallèles de ladite ossature (10), puis ledit conduit (30) est fixé auxdits colliers (40) dans le prolongement des passages (41) délimités par lesdits colliers (40).

8. Procédé de montage selon la revendication 6, dans lequel :
- préalablement à l'étape a), deux accessoires de connexion (70) sont respectivement interposés entre deux tronçons (13A, 13B) d'au moins deux longerons (13) parallèles de ladite ossature (10), chaque accessoire de connexion (70) comportant une partie centrale (71) qui délimite au moins un passage (73) pour les éléments conducteurs (50) et deux parties d'extrémité (72) qui s'étendent de part et d'autre de ladite partie centrale (71) et qui sont respectivement adaptées à immobiliser les deux tronçons (13A, 13B) du longeron (13) dans l'axe l'un de l'autre, et
- à l'étape a), ledit conduit (80) est fixé aux accessoires de connexion (70), dans le prolongement des passages (73) délimités par les parties centrales (71) desdits accessoires de connexion (70).

9. Procédé de montage selon l'une des revendications 1 à 5, dans lequel, à l'étape a), ledit conduit est fixé au panneau puis le panneau est fixé à l'ossature.

## Patentansprüche

1. Montageverfahren für eine Hohlwand, das folgende Schritte umfasst:
a) derartiges Anbringen eines Kabelkanals (30 ; 80) für Leitungen (50) in Bezug zum Tragwerk (10) der Hohlwand, dass sich ein Seitenflügel (33) des Kanals (30 ; 80) quer zur Rückseite einer Platte (20) dieser Hohlwand erstreckt,
b) Bohren einer Öffnung (21) durch diese Platte (20),
c) Zugang zu diesem Kanal (30 ; 80) durch diese Öffnung (21), um punktweise ein Fenster (35 ; 85) zu öffnen, **dadurch gekennzeichnet, dass** sich dieses Fenster im Seitenflügel (33) befindet.

2. Montageverfahren nach Anspruch 1, bei dem diese Öffnung (21) im Schritt b) neben dem Kabelkanal (30 ; 80) gebohrt wird.

3. Montageverfahren nach einem der Ansprüche 1 und 2, bei dem ein Schritt d) vorgesehen ist, der darin besteht, eine Leitung (50) von der Innenseite des Kabelkanals (30 ; 80) bis zu dieser Öffnung (21) zu ziehen, um dort ein auf der Platte aufgestecktes Gerät anzuschließen.

4. Montageverfahren nach Anspruch 3, bei dem im Schritt d) eine Dose (60) mit einem Zugangsloch derart in die Innenseite der Öffnung (21) gesteckt wird, dass die Leitung (50) durch dieses Zugangsloch verläuft.

5. Montageverfahren nach einem der Ansprüche 1 bis 4, bei dem, da der Seitenflügel (33 ; 82) eine Vielzahl von abtrennbaren oder eindrückbaren Abschnitten aufweist, der Schritt c) darin besteht, mindestens einen dieser abtrennbaren Abschnitte abzubrechen oder einzudrücken.

6. Montageverfahren nach einem der Ansprüche 1 bis 5, bei dem im Schritt a) der Kanal (30 ; 80) an das Tragwerk (10) und dann die Platte (20) an das Tragwerk (10) fixiert wird, um den Kanal (30 ; 80) abzudecken.

7. Montageverfahren nach Anspruch 6, bei dem im Schritt a) mindestens zwei Kabelschellen (40), die jeweils einen Verlauf (41) für die Leitungen (50) abgrenzen, auf zum Tragwerk (10) parallele Längsträger (13) fixiert werden, und dann der Kanal (30) in der Verlängerung der von den Kabelschellen (40) abgegrenzten Leitungsverläufe (41) an den Kabelschellen (40) fixiert wird.

8. Montageverfahren nach Anspruch 6, bei dem:
- dem Schritt a) vorausgehend zwei Anschlussformstücke (70) jeweils zwischen zwei Abschnitten (13A, 13B) von mindestens zwei zum Tragwerk (10) parallelen Längsträgern (13) dazwischengesetzt werden, wobei jedes Anschlussformstück (70) ein Mittelteil (71) umfasst, das mindestens einen Verlauf (73) für die Leitungen (50) abgrenzt, sowie zwei Endteile (72), die sich auf beiden Seiten des Mittelteils (71) erstrecken und die jeweils die beiden Abschnitte (13A, 13B) des Längsträgers (13) auf derselben Achse blockieren können, und
- im Schritt a) der Kanal (80) in der Verlängerung der von den Mitteilteilen (71) der Anschlussformstücke (70) abgegrenzten Leitungsverläufe (73) an diese Anschlussformstücke (70) fixiert wird.

9. Montageverfahren nach einem der Ansprüche 1 bis 5, bei dem dieser Kanal im Schritt a) an die Platte, und dann die Platte am Tragwerk fixiert wird.

## Claims

1. An assembly method for assembling a hollow wall, said method comprising steps consisting in:
a) positioning a conduit (30; 80) for running conductive elements (50) relative to a frame (10) of the hollow wall, in such a manner that a side flange (33) of said conduit (30; 80) extends transversally to the rear face of a panel (20) of said hollow wall;
b) piercing an opening (21) through said panel (20); and
c) accessing said conduit (30; 80) through said opening (21) so as to open a window (35; 85) locally, the method being **characterized in that** said window is in said side flange (33).

2. An assembly method according to claim 1, wherein, in step b), said opening (21) is pierced beside said conduit (30; 80).

3. An assembly method according to claim 1 or claim 2, wherein a step d) is provided consisting in pulling a conductive element (50) from the inside of said conduit (30; 80) until it reaches said opening (21), so as to connect thereto an appliance fitted on said panel.

4. An assembly method according to claim 3, wherein, in step d), a box (60) presenting an access hole is engaged inside said opening (21) in such a manner that said conductive element (50) passes through said access hole.

5. An assembly method according to any one of claims 1 to 4, wherein since said side flange (33; 82) presents a plurality of breakable or knock-out portions, said step c) consists in breaking or in knocking out at least one of said breakable portions.

6. An assembly method according to any one of claims 1 to 5, wherein, in step a), said conduit (30; 80) is fastened to the frame (10), then the panel (20) is fastened to the frame (10) so as to receive the conduit (30; 80).

7. An assembly method according to claim 6, wherein, in step a), at least two collars (40) that each define a passage (41) for passing the conductive elements (50) are fastened to parallel elongate members (13) of said frame (10), then said conduit (30) is fastened to said collars (40) to extend the passages (41) defined by said collars (40).

8. An assembly method according to claim 6, wherein:
• prior to step a), two connection accessories (70) are interposed between two segments (13A, 13B) respectively of at least two parallel elongate members (13) of said frame (10), each connection accessory (70) comprising a central portion (71) that defines at least one passage (73) for passing the conductive elements (50), and two end portions (72) that extend on either side of said central portion (71) and that are adapted respectively to hold the two segments (13A, 13B) of the elongate members (13) in line with each other; and
in step a), said conduit (80) is fastened to the connection accessories (70), to extend the passages (73) defined by the central portions (71) of said connection accessories (70).

9. An assembly method according to any one of claims 1 to 5, wherein, in step a), said conduit is fastened to the panel, then the panel is fastened to the frame.
